# EUROPEAN PATENT SPECIFICATION

(11) **EP 0 458 200 B1**
(45) Date of publication and mention of the grant of the patent: **20.07.1994**
(21) Application number: 91107987.9
(22) Date of filing: 16.05.1991
(51) Int. Cl.: G01J 5/00

(54) **Radiant thermometer**
Strahlungsthermometer
Thermomètre à radiation

(30) Priority: 23.05.1990 JP 53942/90 U
(43) Date of publication of application: 27.11.1991
(73) Proprietor: HORIBA, LTD., Minami-ku Kyoto (JP)
(72) Inventor: Nomura, Toshiyuki, Nishikyo-ku, Kyoto-city, Kyoto (JP); Osuga, Naohiro, Takatsuki-city, Osaka (JP); Tsujioka, Yuji, Minami-ku, Kyoto-city, Kyoto (JP); Matsumoto, Naoyuki, Nakagyo-ku, Kyoto-city, Kyoto (JP)
(74) Representative: TER MEER STEINMEISTER & PARTNER GbR

(56) References cited:
- DE-C- 3 710 486
- US-A- 3 081 632
- US-A- 4 081 678

## Description

### Field of the Invention

The present invention relates to a radiant thermometer as claimed in the preamble of claim 1 for detecting infrared rays radiated from an object which temperature has to be measured on the basis of a quantity of said infrared rays radiated from said object, wherein a sighting system for indicating a particular minute point to be measured is provided.

### Description of the Prior Art

A radiant thermometer detects infrared rays radiated from an object to be measured and is not brought into contact with said object. Accordingly, said radiant thermometer for measuring a temperature of a small portion and the like is provided with a sighting system for indicating a position to be measured.

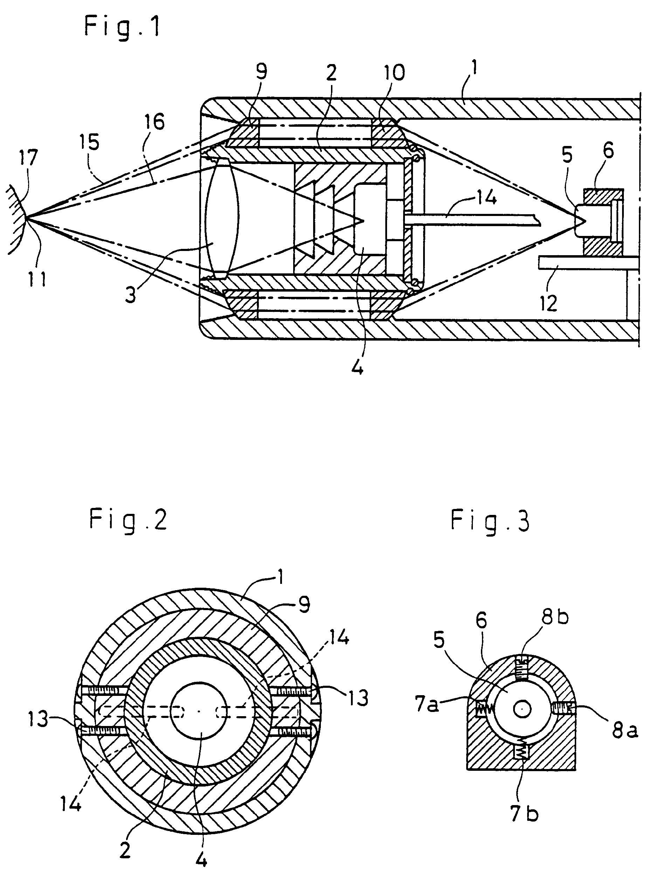

A radiant thermometer is already disclosed in for example Fig. 1 of Japanese Utility Model Application Laid-Open No. Sho 55-175835 which is capable of setting sights on the object to be measured.

In this radiant thermometer, infrared rays are condensed by means of a condensing lens to be incident upon a detector and a sighting light source and a sighting lens for focusing into an image of a sighting light on a point to be measured are provided on an optical axis on the side in front of said condensing lens. Said image of said sighting light source is distinctly focused on said point to be measured in order to indicate said point.

In this conventional radiant thermometer, the image of the sighting light source is focused on the point to be measured by means of said sighting lens, so that, even though said object to be measured or a portion to be measured is minute, a shift of a sighting position in the radial direction of the sighting lens can be comparatively easily removed by focusing said sighting light onto the object to be measured or said portion to be measured.

However, the sighting light source and the sighting lens are provided on the optical axis on the side in front of the condensing lens, so that infrared rays are blocked by the sighting light source and the sighting lens which means that said infrared rays radiated from the object to be measured can not be incident upon the condensing lens and thus a problem has occurred in that said infrared rays at these portions make a loss.

Further, an opening angle from the point to be measured to the sighting lens is considerably smaller than that from the point to be measured to the condensing lens. Accordingly, a problem has occurred in that a shift in focus in the direction of the optical axis of the sighting lens can only be identified with difficulty and thus it is difficult to severely adjust the focus. Moreover, if a focus of the sighting light is shifted in the direction of the optical axis of the sighting lens, a difference of a diameter to be measured due to a dislocation of the point to be measured is considerably increased in comparison with said shift in focus, so that a problem has occurred also in that it is difficult to accurately position the point to be measured within the minute portion to be measured.

### Summary of the Invention

The present invention solves the above described problems and aims at the provision of a radiant thermometer provided with a sighting system capable of making a point to be measured accurately coincide with also a minute position to be measured.

A radiant thermometer, wherein infrared rays radiated from a point to be measured are focused on a light-receiving surface of a detector by means of a condensing lens, according to the present invention is characterized in that a visible sighting light source is arranged on an optical axis of said condensing lens on the side opposite to said light-receiving surface of said detector and a sighting lens with an optical axis thereof coinciding with said optical axis of the condensing lens is arranged outside of a circumference of the condensing lens so that a sighting light from said sighting light source may be focused on said point to be measured by means of said sighting lens.

A ringed or non-ringed lens may be used as the sighting lens. And, the sighting lens having an optional construction capable of focusing the sighting light from the sighting light source on the point to be measured can be used. In addition, a number of sighting lenses arranged in the direction of the optical axis of the condensing lens may be optionally used and it is determined depending upon said construction of the sighting lens and the like.

In the radiant thermometer according to the present invention, the sighting light from the sighting light source is guided by means of the sighting lens to be focused on the optical axis of the condensing lens and a position, where the sighting light is focused, coincides with the point to be measured determined for the radiant thermometer. And, in order to measure the temperature of the object, the portion to be measured is irradiated with the sighting light and the focus is adjusted to make the point to be measured coincide with the portion to be measured.

Further, since the sighting light source is arranged behind the detector, the whole quantity of infrared rays radiated from the portion to be measured is incident upon the condensing lens. In addition, since the sighting lens is arranged outside of a circumference of the condensing lens and said opening angle from the point to be measured to the condensing lens, the shift in focus of the sighting light in the direction of the optical axis of the condensing lens can be easily confirmed and thus the focus can be severely adjusted.

### Brief Description of the Drawings

A fist preferred embodiment is shown in Figs. 1 to 3, in which
Fig. 1 is a sectional front view;
Fig. 2 is a sectional side view; and
Fig. 3 is a sectional view showing a holder of a sighting light source.
Fig. 4 is a sectional side view showing a second preferred embodiment.
Fig. 5 is a schematic drawing showing a third preferred embodiment.
Fig. 6 is a schematic drawing showing a fourth preferred embodiment.
Fig. 7 is a schematic drawing showing a fifth preferred embodiment.
Fig. 8 is a schematic drawing showing a sixth preferred embodiment.

### Detailed Description of the Preferred Embodiments

A first preferred embodiment of a radiant thermometer according to the present invention will be below described with reference to Figs. 1 to 3.

Referring to Figs. 1 to 3 reference numeral 1 designates a case with a lens-barrel 2 arranged at a central portion thereof. Reference numeral 3 designates a condensing lens for condensing infrared rays radiated from a point to be measured. Said condensing lens 3 is arranged within an end portion of said lens-barrel 2 and a detector 4 for focusing infrared rays, which have transmitted through said condensing lens 3, is arranged at the other end of the lens-barrel 2. A lens made of Si, Ge, BaF₂ and the like, through which infrared rays are transmissible, is used as the condensing lens 3.

Reference numeral 5 designates a sighting light source made of LED arranged on an optical axis of the condensing lens 3 on the side opposite to a light-receiving surface of said detector 4. Said sighting light source 5 is movably arranged on a holder 6 so as to adjust an optical axis thereof (refer to Fig. 3). Reference numerals 7a, 7b designate springs mounted on said holder 6 so as to support said sighting light source 5 and the holder 6 is provided with adjustable screws 8a, 8b mounted thereon opposite said springs 7a, 7b. Accordingly, upon rotating one or both of said adjustable screws 8a, 8b, the springs 7a, 7b are expanded and contracted correspondingly to move the sighting light source 5.

Reference numerals 9, 10 designate aspherical (hyperbolic) ring sighting lenses arranged outside of the lens-barrel 2 so that a visible sighting light radiated from the sighting light source 5 may be focused on said point 11 to be measured set on the basis of a distance between the condensing lens 3 and the detector 4 and the like by making optical axes thereof coincide with said optical axis of the condensing lens 3. Reference numeral 12 designates a printed circuit board and reference numeral 13 designates cap screws for fixedly mounting said sighting lenses 9, 10 on said case 1 (refer to Fig. 2) provided at opposite positions. Reference numeral 14 designates lead wires of the detector 4, a compensating temperature sensor (not shown) and the like. Said lead wires 14 are positioned so that they may be nearly put on said cap screws 13 in the direction of the optical axis of the condensing lens 3. Reference numeral 15 designates an optical path of the sighting light radiated from the sighting light source 5, reference numeral 16 designates an optical path of infrared rays radiated from an object to be measured positioned at the point 11 to be measured, and reference numeral 17 designating an object to be measured.

In this radiant thermometer, the sighting light from the sighting light source 5 is focused on the point 11 to be measured by means of the sighting lenses 9, 10, as above described. In addition, when it is required to adjust the optical axis of the sighting light source 5, the sighting light source 5 is moved by rotating one or both of the adjustable screws 8a, 8b, as above described.

Accordingly, when a temperature of the object is measured, the sighting light radiated from the sighting light source 5, transmitted through the sighting lenses 9,10, and focused is irradiated on a surface of the object 17 and focused on a position to be measured, whereby the point 11 to be measured can be accurately positioned at said desired position of the object to be measured.

And, since the sighting lenses 9, 10 are arranged outside of the lens-barrel 2, it is clear that an opening angle from the point 11 to be measured to the sighting lens 9 is larger than that from the point 11 to measured to the condensing lens 3.

Accordingly, it is easy to confirm a shift of the sighting light in focus (shaded image) in the direction of the optical axis of the condensing lens 3 and thus the sighting light can be severely focused. Moreover, even though the sighting light is shifted in focus, in the above described manner, a difference in measured diameter due to a dislocation of the point 11 to be measured is small in comparison with said shift in focus. Accordingly, also in the case where the object to be measured is small or the portion to be measured is minute, if the sighting light is focused on them, the point 11 to be measured can be accurately positioned at the minute object to be measured or the portion to be measured and thus also the temperature of the minute object to be measured or portion to be measured can be accurately measured.

Furthermore, since the sighting lenses 9, 10 have a ring-like form, also influences by the fixing cap screws 13 and the like are reduced and thus it is easier to increase a quantity of sighting light and distinctly focus the sighting light.

And, since the sighting light source 5 is arranged on the side opposite to the light-receiving surface of the detector 4, the whole quantity of infrared rays radiated from the position to be measured of the object to be measured can be incident upon the detector 4 through the condensing lens 3 and thus the loss of infrared rays can be prevented.

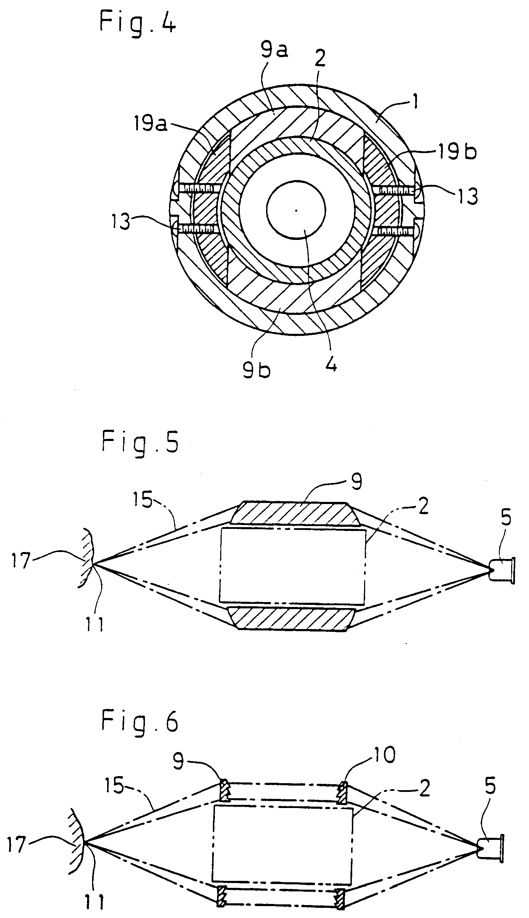

Fig. 4 shows a second preferred embodiment.

In this preferred embodiment, respective independent sighting lenses 9a, 9b are arranged on opposite sides in the radial direction of the lens-barrel 2. Accordingly, the quantity of the transmitted sighting light is smaller than that in said first preferred embodiment, so that a sighting light source (not shown) having a larger quantity of light, which can cope with said reduction in quantity of the transmitted sighting light is used. For example, a LED having an increased brightness is used. Reference numerals 19a, 19b designate support members for fixing the sighting lenses 9a, 9b.

Other constructions are same as in the first preferred embodiment, so that they are designated by the same reference numerals as in the first preferred embodiment and relates to the sighting lenses.

In this preferred embodiment, a sighting lens 9 comprises a piece of double-convex lens having aspherical surfaces (hyperbolic surfaces). Said sighting lens 9 can be composed of also a molded lens to remarkably reduce the production costs.

Fig. 6 shows a fourth preferred embodiment wherein sighting lenses 9, 10 are composed of a pair of Fresnel's lenses. Lenses corresponding to aspherical surfaces can be obtained from said Fresnel's lenses by suitably selecting a method of cutting their grooves to reduce production costs.

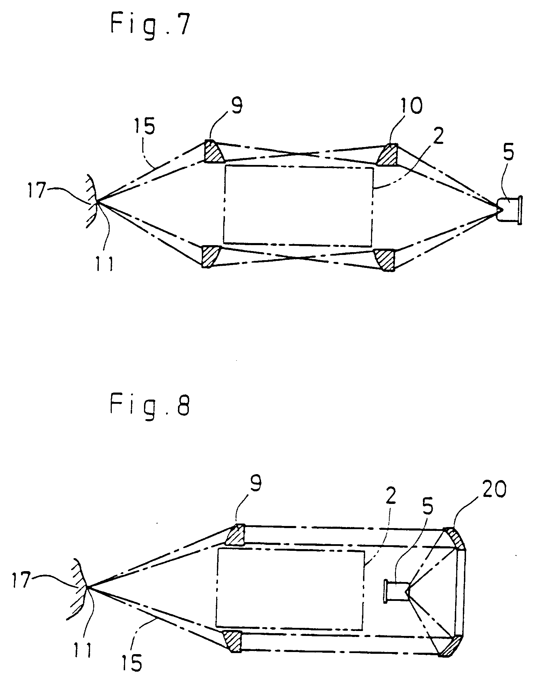

Fig. 7 shows a fifth preferred embodiment.

In this preferred embodiment, the aberration of spherical lenses is used on the contrary, that is sighting lenses 9, 10 are composed of a pair of spherical lenses. Since said spherical lenses are used as said sighting lenses 9, 10, a small-scale production can be easily conducted.

Fig. 8 shows a sixth preferred embodiment.

In this preferred embodiment, a sighting light from a sighting light source 5 is reflected by a reflecting mirror 20 to be incident upon a sighting lens 9 and focused on a point 11 to be measured. Accordingly, an optical axis of said sighting light can be adjusted by adjusting an angle of said reflecting mirror 20. The reflecting mirror 20 may have a ring-like shape.

Other constructions of the respective preferred embodiments shown in Figs. 5 to 8 are same as in the first preferred embodiment, so that they are designated by the same reference numerals as in the first preferred embodiment.

In the radiant thermometer, wherein the condensing lens for condensing the infrared rays radiated from the object to be measured and making them incident upon the detector is provided in the above described manner, the sighting light source is arranged on the side opposite to the light-receiving surface of the detector and the sighting lens for focusing the sighting light from the sighting light source is arranged outside of the circumference of the condensing lens.

Accordingly, the whole infrared rays radiated from the object to be measured can be incident upon the condensing lens and thus the condensing loss can be prevented, so that the temperature of the object to be measured can be accurately measured.

And, since the opening angle from the point to be measured to the sighting lens is larger than that from the point to be measured to the condensing lens, the shift in focus of the sighting light in the direction of the optical axis of the condensing lens can be easily confirmed and thus the focus can be severely adjusted. Moreover, even though the shift in focus of the sighting light occurs, the difference of the diameter to be measured due to the dislocation of the point to be measured is reduced in comparison with the shift in focus. Accordingly, the point to be measured can be accurately positioned at also the minute object to be measured or position to be measured by focusing the sighting light and thus the temperature of the object to be measured or position to be measured can be accurately obtained.

## Claims

1. A radiant thermometer, in which infrared rays radiated from a point to be measured are focused on a light-receiving surface of a detector (4) by means of a condensing lens (3) is **characterized in that** a visible sighting light source (5) is arranged on an optical axis of said condensing lens (3) on the side of said detector (4) opposite to said light-receiving surface and a sighting lens (9, 19) with an optical axis thereof coinciding with said optical axis of the condensing lens (3) is arranged outside of a circumference of the condensing lens (3)so that a sighting beam from said sighting light source (5) may be focused on said point to be measured by means of said sighting lens (9, 10).

2. The radiant thermometer as set forth in claim 1, **characterized in** **that** the sighting lens (9, 10) is formed so as to be aspherical.

3. The radiant thermometer as set forth in claim 1, **characterized in** **that** said sighting light from the sighting light source (5) is reflected by a reflecting mirror (20) to be incident upon the sighting lens (9).

4. The radiant thermometer as set forth in claim 1, **characterized in** **that** the sighting lens (9, 10) is composed of a pair of Fresnel's lenses.

5. The radiant thermometer as set forth in one of the claims 1 to 4, **characterized** **in that** the sighting lens (9, 10) has a ring-like shape.

6. The radiant thermometer as claimed in one of the claims 1 to 6, **characterized** **in that** the sighting light source (5) is movably arranged in radial directions thereof within a holder (6).

7. The radiant thermometer as claimed in one of the claims 1 to 6, **characterized** **in that** the condensing lens (3) and the infrared detector (4) are mounted within a lens-barrel (2) carrying on its outer circumferential surface the sighting lens (9, 10).

8. The radiant thermometer as claimed in one of the claims 1 to 6, **characterized** **in that** lens-barrel (2) is supported via said sighting lens (9,10) in a lens-barrel housing (1).

9. The radiant thermomedter as claimed in one of the claims 3 to 8, **characterized in that** the reflecting mirror (20) has a ring-like shape.

## Patentansprüche

1. Strahlungsthermometer, bei dem von einem zu messenden Punkt abgestrahlte Infrarotstrahlung mit Hilfe einer Kondensorlinse (3) auf die Lichtempfangsfläche eines Detektors (4) fokussiert wird, **dadurch gekennzeichnet,** daß eine Ziellichtquelle (5) mit sichtbarem Licht auf der optischen Achse der Kondensorlinse (3) auf der der Lichtempfangsfläche des Detektors (4) abgewandten Seite angeordnet ist, und eine Ziellinse (9, 10), deren optische Achse mit der optischen Achse der Kondensorlinse (3) zusammenfällt außerhalb des Umfangs der Kondensorlinse (3) so angeordnet ist, daß ein Ziellichtbündel von der Ziellichtquelle (5) durch die Ziellinse (9, 10) auf den zu messenden Punkt fokussiert werden kann.

2. Strahlungsthermometer nach Anspruch 1, **dadurch** **gekennzeichnet,** daß die Ziellinse (9, 10) so ausgebildet ist, daß sie asphärisch ist.

3. Strahlungsthermometer nach Anspruch 1, **dadurch** **gekennzeichnet,** daß das Ziellicht von der Ziellichtquelle (5) durch einen Reflexionsspiegel (20) so reflektiert wird, daß es auf die Ziellinse (9) fällt.

4. Strahlungsthermometer nach Anspruch 1, **dadurch** **gekennzeichnet,** daß die Ziellinse (9, 10) aus einem Paar Fresnel-Linsen besteht.

5. Strahlungsthermometer nach einem der Ansprüche 1 bis 4, **dadurch gekennzeichnet,** daß die Ziellinse (9, 10) ringförmig ist.

6. Strahlungsthermometer nach einem der Ansprüche 1 bis 6, **dadurch gekennzeichnet,** daß die Ziellichtquelle (5) in radialer Richtung derselben innerhalb eines Halters (6) verschiebbar angeordnet ist.

7. Strahlungsthermometer nach einem der Ansprüche 1 bis 6, **dadurch gekennzeichnet,** daß die Kondensorlinse (3) und der Infrarotdetektor (4) innerhalb eines Linsenzylinders (2) angeordnet sind, der die Ziellinse (9, 10) an seinem Außenumfang trägt.

8. Strahlungsthermometer nach einem der Ansprüche 1 bis 6, **dadurch gekennzeichnet,** daß ein Linsenzylinder (2) über die Ziellinse (9, 10) in einem Linsenzylindergehäuse (1) gehalten wird.

9. Strahlungsthermometer nach einem der Ansprüche 3 bis 8, **dadurch gekennzeichnet,** daß der Reflexionsspiegel (20) ringförmig ist.

## Revendications

1. Un thermomètre à rayonnement dans lequel des rayons infrarouges émis d'un point à mesurer sont focalisés sur une surface de réception de lumière d'un détecteur (4) au moyen d'une lentille de champ (3), caractérisé en ce qu'une source de lumière visible de visée (5) est disposée sur un axe optique de ladite lentille de champ (3) sur la face dudit détecteur (4) qui est opposée à ladite surface de réception de lumière, et une lentille de visée (9, 19) dont l'axe optique coïncide avec ledit axe optique de la lentille de champ (3) et disposé en dehors d'une circonférence de la lentille de champ (3) de sorte qu'un faisceau de visée de ladite source lumineuse de visée (5) puisse être focalisé sur ledit point à mesurer au moyen de ladite lentille de visée (9, 10).

2. Le thermomètre à rayonnement selon la revendication 1, caractérisé en ce que la lentille de visée (9, 10) présente une forme asphérique.

3. Le thermomètre à rayonnement selon la revendication 1, caractérisé en ce que ladite lumière de visée de ladite source lumineuse de visée (5) est réfléchie par un miroir réfléchissant (20) afin de frapper la lentille de visée (9).

4. Le thermomètre à rayonnement selon la revendication 1, caractérisé en ce que la lentille de visée (9, 10) est composée d'une paire de lentilles de Fresnel's.

5. Le thermomètre à rayonnement selon l'une des revendications 1 à 4, caractérisé en ce que la lentille de visée (9, 10) présente une forme annulaire.

6. Le thermomètre à rayonnement selon l'une des revendications 1 à 5, caractérisé en ce que la source lumineuse de visée (5) est disposée mobile selon des directions radiales à l'intérieur d'un support (6).

7. Le thermomètre à rayonnement selon l'une des revendications 1 à 6, caractérisé en ce que la lentille de champ (3) et le détecteur à infrarouge (4) sont montés à l'intérieur d'un tube ou canon de lentilles (2) portant sur sa surface circonférentielle extérieure la lentille de visé (9,10).

8. Le thermomètre à rayonnement selon l'une des revendications 1 à 6, caractérisé en ce que le tube de lentilles (2) est supporté via ladite lentille de visée (9, 10) dans un boîtier de tube de lentilles (1).

9. Le thermomètre à rayonnement selon l'une des revendications 3 à 8, caractérisé en ce que le miroir réfléchissant (20) présente une forme annulaire.
